# EUROPEAN PATENT APPLICATION

(11) **EP 4 821 980 A1**
(43) Date of publication of application: **14.10.2026**
(21) Application number: 24900425.0
(22) Date of filing: 19.11.2024
(51) Int. Cl.: C08L 7/00, B60C 1/00, C08K 3/04, C08K 3/36

(54) **TREAD RUBBER COMPOSITION AND TIRE**

(30) Priority: 07.12.2023 JP 2023207259
(71) Applicant: BRIDGESTONE CORPORATION, Chuo-ku Tokyo 104-8340 (JP)
(72) Inventor: MITO Kei, Tokyo 104-8340 (JP); MAEDA Ryosuke, Tokyo 104-8340 (JP)
(74) Representative: Marks & Clerk LLP
(86) International application number: PCT/JP2024/041027
(87) International publication number: WO 2025/121130

(57) **Abstract**

With the aim of providing a rubber composition for tread having excellent wear resistance without deteriorating other physical properties, a rubber composition contains a rubber component, silica, carbon black, and an antioxidant, wherein the rubber component includes high-purity natural rubber having a nitrogen content of 0.3 mass% or less, total content of the silica and the carbon black is 50 parts by mass or more per 100 parts by mass of the rubber component, the carbon black has a nitrogen adsorption specific surface area (N₂SA) of 135 m²/g or more, and content of the antioxidant is 0.4 parts by mass or more per 100 parts by mass of the rubber component.

## Description

### TECHNICAL FIELD

The present disclosure relates to a rubber composition for tread and a tire.

### BACKGROUND

Conventionally, in heavy-duty pneumatic tires for rough roads, as a method for preventing deterioration of properties such as heat buildup performance, appearance performance, and wear resistance, selection of the carbon black to be blended in the tire tread rubber composition and optimization of its filling amount have been carried out. In recent years, tread rubber compositions for heavy-duty pneumatic tires in which silica is blended together with carbon black have also been variously proposed.

For example, PTL 1 to PTL 3 disclose techniques in which silica is blended together with carbon black in a rubber composition for tread of heavy-duty pneumatic tires for construction vehicles and the like, in order to improve wear resistance, anti-cut resistance, heat buildup performance, and other properties.

### CITATION LIST

### Patent Literature

PTL 1: JP H1-311141 A
PTL 2: JP H3-65406 A
PTL 3: JP H4-226140 A

### SUMMARY

### (Technical Problem)

However, regarding the techniques of PTL 1 to PTL 3, in the rubber composition for tread of heavy-duty pneumatic tires, none were sufficient as attempts to improve heat buildup performance, appearance performance, and wear resistance after running, and further to suppress deterioration of physical properties. In particular, further improvement in wear resistance has been desired.

Therefore, an object of the present disclosure is to provide a rubber composition for tread having excellent wear resistance without deteriorating other physical properties.

Further, an object of the present disclosure is to provide a tire having excellent wear resistance without deteriorating other physical properties.

### (Solution to Problem)

The gist configuration of the present disclosure for solving the above problems is as follows.

A rubber composition for tread comprising a rubber component, silica, carbon black, and an antioxidant, wherein
the rubber component includes high-purity natural rubber having a nitrogen content of 0.3 mass% or less,
total content of the silica and the carbon black is 50 parts by mass or more per 100 parts by mass of the rubber component,
the carbon black has a nitrogen adsorption specific surface area (N₂SA) of 135 m²/g or more, and
content of the antioxidant is 0.4 parts by mass or more per 100 parts by mass of the rubber component.

The tread rubber composition having the above configuration exhibits excellent wear resistance without deteriorating other physical properties.

A tire comprising the above rubber composition for tread.

The tire having the above configuration exhibits excellent wear resistance without deteriorating other physical properties.

### (Advantageous Effect)

According to the present disclosure, it is possible to provide a rubber composition for tread having excellent wear resistance without deteriorating other physical properties.

Further, according to the present disclosure, it is possible to provide a tire having excellent wear resistance without deteriorating other physical properties.

### DETAILED DESCRIPTION

Hereinafter, an embodiment of the tread rubber composition and tire of the present disclosure will be illustratively described.

### (Tread Rubber Composition)

The tread rubber composition of the present disclosure comprises a rubber component, silica, carbon black, and an antioxidant.

Hereinafter, each component constituting the tread rubber composition of the present disclosure will be described.

### (Rubber Component)

The rubber component contained in the tread rubber composition of the present disclosure includes high-purity natural rubber having a nitrogen content of 0.3 mass% or less.

By including the high-purity natural rubber, excessive protein is not contained in the natural rubber, and as a result, gelation can be suppressed, thereby achieving excellent wear resistance.

From the same viewpoint, it is preferable that the nitrogen content in the natural rubber is 0.25 mass% or less, and more preferably 0.2 mass% or less.

Here, as long as the nitrogen content of the high-purity natural rubber is 0.3 mass% or less, other requirements are not particularly limited. For example, the high-purity natural rubber may be natural rubber from which protein has been removed by a centrifugal separation process.

The centrifugal separation process is a process in which deproteinization is performed by centrifugal separation from natural rubber latex, which is the raw material of natural rubber. The conditions of the centrifugal separation (such as rotational speed and time) are not particularly limited and may be appropriately changed according to the amount of protein to be removed. For example, when the nitrogen content in the natural rubber is to be set to 0.1 mass% or less, the centrifugal separation process may be performed several times at a rotational speed of about 7500 rpm.

After the centrifugal separation process, high-purity natural rubber can be obtained by performing washing and drying treatment.

The natural rubber latex used in the centrifugal separation process is not particularly limited. For example, field latex collected from rubber trees or concentrated natural rubber latex obtained by processing the same can be used. Also, the dry rubber content in the natural rubber latex is not particularly limited, but from the viewpoint of obtaining better wear resistance, it is preferable to be 10 mass% or more, more preferably 30 mass%, and even more preferably 40 mass% or more.

The content of the high-purity natural rubber in the rubber component may be 100%, but as long as the object of the present disclosure is not impaired, other rubbers may also be included. Furthermore, the natural rubber may be not only the high-purity natural rubber but also a mixture with ordinary natural rubber.

In that case, from the viewpoint of further improving wear resistance, it is preferable that the content of the high-purity natural rubber in the rubber component is 50 mass% or more, more preferably 70 mass% or more, and particularly preferably 90 mass% or more.

The rubber component may also include, in addition to the above-described natural rubber, other synthetic rubbers. Examples of synthetic rubbers include diene synthetic rubbers such as butadiene rubber (BR), isoprene rubber (IR), styrene-butadiene rubber (SBR), styrene-isoprene-butadiene rubber (SIBR), chloroprene rubber (CR), acrylonitrile-butadiene rubber (NBR), and non-diene synthetic rubbers such as ethylene-propylene-diene rubber (EPDM), ethylene-propylene rubber (EPM), and butyl rubber (IIR).

Among the above-described synthetic rubbers, it is preferable that the rubber component contains butadiene rubber and/or styrene-butadiene rubber. This is because both low loss property and wear resistance can be achieved at a higher level.

The natural rubber and the diene synthetic rubber (hereinafter collectively referred to as "diene rubber") may be diene rubber that has not been modified (hereinafter sometimes referred to as "unmodified diene rubber") or diene rubber that has been modified (hereinafter sometimes referred to as "modified diene rubber").

### (Silica)

The tread rubber composition for tires of the present disclosure contains, in addition to the above-described rubber component, silica, and the total content of the silica and carbon black described later is 50 parts by mass or more per 100 parts by mass of the rubber component.

By setting the total content of the silica and the carbon black to 50 parts by mass or more per 100 parts by mass of the rubber component, the reinforcement of the tire is enhanced, and more excellent wear resistance can be achieved. From the same viewpoint, it is preferable that the total content of the silica and the carbon black is 60 parts by mass or more per 100 parts by mass of the rubber component, and more preferably 65 parts by mass or more. On the other hand, from the viewpoint of suppressing deterioration of processability and low heat generating property of the rubber composition, it is preferable that the total content of the silica and the carbon black is 80 parts by mass or less per 100 parts by mass of the rubber component, more preferably 75 parts by mass or less, and even more preferably 70 parts by mass or less.

The content of the silica is required to satisfy the above-described total content, but from the viewpoint of achieving anti-cut resistance, it is preferable that the content of the silica alone is 5 parts by mass or more per 100 parts by mass of the rubber component.

By setting the content of the silica to 5 parts by mass or more per 100 parts by mass of the rubber component, the reinforcement of the tire is enhanced, and anti-cut resistance can be achieved. From the same viewpoint, it is preferable that the content of the silica is 10 parts by mass or more per 100 parts by mass of the rubber component. On the other hand, from the viewpoint of suppressing deterioration of processability of the rubber composition, it is preferable that the content of the silica is 25 parts by mass or less per 100 parts by mass of the rubber component.

Here, it is preferable that the silica has a CTAB specific surface area of 200 to 240 ml/100 g. When the CTAB specific surface area of the silica is 200 ml/100 g or more, an effect of improving anti-cut resistance is obtained, and when the CTAB specific surface area of the silica is 240 ml/100 g or less, poor dispersion and deterioration of processability can be suppressed.

The CTAB specific surface area of the silica can be measured, for example, in accordance with JIS K 6430:2008.

Examples of the silica include wet silica (hydrous silicate), dry silica (anhydrous silicate), calcium silicate, aluminum silicate, and the like. Among these, wet silica is preferable because it has many silanol groups. These silicas may be used alone or in combination of two or more.

From the viewpoint of reducing environmental load, silica derived from plant silicate is also preferable as the silica. Such plant silicate is present, for example, in plants of the classes Bryopsida, Pteridophyta, Equisetopsida, Cucurbitaceae, Urticaceae, and Poaceae. Among these plants, Poaceae plants are preferable. Examples of Poaceae plants include rice, bamboo grass, and sugarcane, among which rice is preferable. Since rice is widely cultivated for food, it can be locally procured in a wide area, and rice husks are generated in large quantities as industrial waste, making it easy to secure the quantity. Therefore, from the viewpoint of ease of procurement, silica derived from rice husks (hereinafter also referred to as "rice husk silica") is particularly preferable as the silica. By using rice husk silica, rice husks, which are industrial waste, can be effectively utilized, and since raw materials can be locally procured near the tire manufacturing plant, energy and cost for transportation and storage can be reduced, which is preferable from various environmental viewpoints. The rice husk silica may be a powder of rice husk charcoal obtained by carbonizing rice husks by heating, or may be precipitated silica produced by preparing an alkali silicate aqueous solution by extracting rice husk ash generated when rice husks are combusted as fuel in a biomass boiler with alkali, and producing by a wet process using the alkali silicate aqueous solution. The method for producing the rice husk charcoal is not particularly limited, and various known methods can be used. For example, rice husk charcoal can be obtained by pyrolyzing rice husks by steaming in a kiln. The rice husk charcoal thus obtained can be pulverized using a known pulverizer (for example, a ball mill), and classified and sorted into a predetermined particle size range to obtain a powder of rice husk charcoal. The precipitated silica derived from rice husks can be produced by the method described in JP 2019-38728 A or the like.

### (Carbon Black)

The rubber composition of the present disclosure further contains carbon black in addition to the above-described rubber component and silica.

This is because the reinforcement of the rubber composition is enhanced and more excellent wear resistance can be obtained.

Here, the carbon black has a nitrogen adsorption specific surface area (N₂SA) of 135 m²/g or more. When the N₂SA of the carbon black is 135 m²/g or more, more excellent wear resistance can be obtained. It is also preferable that the nitrogen adsorption specific surface area (N₂SA) of the carbon black is 180 m²/g or less. When the N₂SA of the carbon black is 180 m²/g or less, deterioration of productivity and low heat generating property can be suppressed.

From the same viewpoint, it is more preferable that the N₂SA of the carbon black is 140 to 170 m²/g.

The nitrogen adsorption specific surface area (N₂SA) of the carbon black can be measured, for example, in accordance with JIS K 6217-7:2013.

It is preferable that the carbon black has a dibutyl phthalate (DBP) oil absorption of 80 to 120 ml/100 g. When the DBP oil absorption of the carbon black is 80 m²/g or more, deterioration of low heat generating property and productivity can be suppressed, and when the N₂SA of the carbon black is 120 ml/100 g or less, gelation can be suppressed and more excellent wear resistance can be obtained.

From the same viewpoint, it is preferable that the DBP of the carbon black is 85 to 110 m²/g, and more preferably 85 to 100 m²/g.

The DBP oil absorption of the carbon black can be measured in accordance with JIS K 6217-4:2017.

The content of the carbon black is required to be set such that the total content with the above-described silica is 50 parts by mass or more per 100 parts by mass of the rubber component.

Further, the content of the carbon black alone is preferably 40 parts by mass or more per 100 parts by mass of the rubber component, more preferably 46 parts by mass or more, and even more preferably 50 parts by mass or more. When the content of the carbon black is 40 parts by mass or more per 100 parts by mass of the rubber component, reinforcement is enhanced and more excellent wear resistance can be obtained. On the other hand, the content of the carbon black is preferably 60 parts by mass or less per 100 parts by mass of the rubber component, and more preferably 55 parts by mass or less. When the content of the carbon black is 60 parts by mass or less per 100 parts by mass of the rubber component, deterioration of low heat generating property can be suppressed.

The carbon black may also include recovered carbon black. In the present specification, "recovered carbon black" refers to carbon black obtained by recovering from raw materials that are waste subjected to recycling. Examples of such waste subjected to recycling include rubber products containing carbon black (particularly vulcanized rubber products) such as used rubber and used tires, and waste oil. "Recovered carbon black" is different from carbon black produced directly from hydrocarbons such as petroleum or natural gas, that is, carbon black that is not a recycled product. Note that "used" here includes not only those that have actually been used and then discarded, but also those that have been manufactured but discarded without actually being used.

### (Antioxidant)

The tread rubber composition of the present disclosure contains, in addition to the above-described rubber component, silica, and optionally carbon black, an antioxidant, and the content of the antioxidant is 0.4 parts by mass or more per 100 parts by mass of the rubber component.

By including the antioxidant in the tread rubber composition in an amount of 0.4 parts by mass or more per 100 parts by mass of the rubber component, the reinforcement and wear resistance of the tread rubber composition can be enhanced. From the same viewpoint, it is preferable that the content of the antioxidant is 1 part by mass or more per 100 parts by mass of the rubber component.

It is preferable that the content of the antioxidant is less than 3 parts by mass per 100 parts by mass of the rubber component. When the content of the antioxidant is less than 3 parts by mass per 100 parts by mass of the rubber component, more excellent anti-cut resistance can be obtained. From the same viewpoint, it is preferable that the content of the antioxidant is less than 2 parts by mass per 100 parts by mass of the rubber component.

The type of antioxidant is not particularly limited. For example, amine antioxidants, phenol antioxidants, and other antioxidants can be used.

Among these antioxidants, from the viewpoint of obtaining more excellent wear resistance, it is preferable to use at least an amine antioxidant.

As the amine antioxidant, it is preferable to use at least one selected from the group consisting of N-(1,3-dimethylbutyl)-N'-phenyl-p-phenylenediamine, N-isopropyl-N'-p-phenylenediamine, N-(3-methacryloyloxy-2-hydroxypropyl)-N'-phenyl-p-phenylenediamine, and N,N'-di-2-naphthyl-p-phenylenediamine. Among these, N-(1,3-dimethylbutyl)-N'-phenyl-p-phenylenediamine is particularly preferable.

The amine antioxidant may be used alone or in combination of two or more.

### (Other Components)

The tread rubber composition of the present disclosure may further contain, in addition to the above-described components, other components as appropriate, selected as needed or for the intended purpose, within a range not impairing the effects of the present disclosure. Examples of other components include silane coupling agents, inorganic fillers other than silica and carbon black, zinc oxide, softeners, tackifiers, dispersants, crosslinking agents, crosslinking accelerators, crosslinking coagents, stearic acid, colorants, antistatic agents, lubricants, and other additives, as well as various known compounding agents commonly used in the rubber industry. These may be commercially available products.

Examples of the silane coupling agent include bis(3-triethoxysilylpropyl)tetrasulfide, bis(3-triethoxysilylpropyl)trisulfide, bis(3-triethoxysilylpropyl)disulfide, bis(2-triethoxysilylethyl)tetrasulfide, bis(3-trimethoxysilylpropyl)tetrasulfide, bis(2-trimethoxysilylethyl)tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyltetrasulfide, 3-triethoxysilylpropyl-N,N-dimethylthiocarbamoyltetrasulfide, 2-triethoxysilylethyl-N,N-dimethylthiocarbamoyltetrasulfide, 3-trimethoxysilylpropylbenzothiazolyltetrasulfide, 3-triethoxysilylpropylbenzothiazolyltetrasulfide, 3-triethoxysilylpropyl methacrylate monosulfide, 3-trimethoxysilylpropyl methacrylate monosulfide, bis(3-dimethoxymethylsilylpropyl)tetrasulfide, 3-mercaptopropyldimethoxymethylsilane, dimethoxymethylsilylpropyl-N,N-dimethylthiocarbamoyltetrasulfide, dimethoxymethylsilylpropylbenzothiazolyltetrasulfide, 3-octanoylthiopropyltriethoxysilane, 3-mercaptopropyltrimethoxysilane, 3-mercaptopropyltriethoxysilane, vinyltriethoxysilane, vinyltrimethoxysilane, 3-aminopropyltriethoxysilane, 3-aminopropyltrimethoxysilane, 3-mercaptopropylmethyldimethoxysilane, γ-glycidoxypropyltrimethoxysilane, γ-glycidoxypropylmethyldiethoxysilane, 3-[ethoxybis(3,6,9,12,15-pentaoxaoctacosan-1-yloxy)silyl]-1-propanethiol (trade name "Si363" manufactured by Degussa), and the like. These silane coupling agents may be used alone or in combination of two or more.

Examples of inorganic fillers other than silica and carbon black include aluminum hydroxide, clay, and the like. Among these inorganic fillers, aluminum hydroxide and the like are preferable because of their relatively high reinforcing property, and clay and the like are effective because of the effects obtained by utilizing their shape characteristics.

Furthermore, there are no particular limitations on the softener, and it may be appropriately selected according to the intended purpose. Examples include naphthenic base oil, paraffin base oil, and aromatic base oil. Here, the content of the softener is preferably 0 to 30 parts by mass per 100 parts by mass of the rubber component. If the content of the softener exceeds 30 parts by mass per 100 parts by mass of the rubber component, there is a risk that the softener may bleed out to the surface of the rubber product or that the wear resistance may decrease.

Furthermore, among the above-mentioned softeners, it is preferable to use naphthenic base oil or paraffin base oil, and most preferable to use naphthenic base oil. This is because aromatic oil contains a large amount of aromatic components, which have high affinity with the chemical agent that is an aromatic compound, and thus more strongly inhibit the reaction with the polymer, making it undesirable. On the other hand, naphthenic base oil and paraffin base oil have the effect of assisting diffusion and reaction within the polymer, and oils with lower pour points diffuse better within the polymer.

It should be noted that the classification of naphthenic base oil, paraffin base oil, and aromatic base oil is determined by CA value, CP value, and CN value. For example, those classified as naphthenic base oil include TDAE, SRAE, RAE, and Black Oil. Those classified as paraffin base oil include spindle oil and paraffin oil.

Furthermore, a mixed oil such as A/O Mix (manufactured by SANKYO YUKA KOGYO K.K.), which is a mixture of naphthenic base oil and naphthenic asphalt, can also provide more preferable effects.

There are no particular limitations on the timing of blending these lubrication oils; for example, the oil may be blended during the production stage of the rubber component, or may be added during the kneading of the rubber composition for tread.

There are also no particular limitations on the crosslinking agent. For example, sulfur may be used.

There are also no particular limitations on the crosslinking accelerator, and any known agent may be used. Examples include thiazole vulcanization accelerators such as 2-mercaptobenzothiazole and dibenzothiazyl disulfide; sulfenamide vulcanization accelerators such as N-cyclohexyl-2-benzothiazylsulfenamide and N-t-butyl-2-benzothiazylsulfenamide; guanidine vulcanization accelerators such as diphenyl guanidine; thiuram vulcanization accelerators such as tetramethylthiuram disulfide, tetraethylthiuram disulfide, tetrabutylthiuram disulfide, tetradodecylthiuram disulfide, tetraoctylthiuram disulfide, tetrabenzylthiuram disulfide, and dipentamethylenethiuram tetrasulfide; dithiocarbamate vulcanization accelerators such as zinc dimethyldithiocarbamate; and zinc dialkyldithiophosphate.

### (Production of Rubber Composition for Tread)

The method for producing the rubber composition for tread of the present disclosure is not particularly limited, but for example, the rubber component may be blended with various components appropriately selected as needed, and by kneading, warming, extrusion, and the like, the rubber composition can be produced.

Further, by vulcanizing the obtained rubber composition, a vulcanized rubber can be obtained.

There are no particular limitations on the kneading conditions, and various conditions such as the input volume of the kneading apparatus, the rotational velocity of the rotor, ram pressure, kneading temperature, kneading time, and type of kneading apparatus may be appropriately selected according to the intended purpose. Examples of kneading apparatuses include Banbury mixers, Intermix, kneaders, and rolls, which are commonly used for kneading rubber compositions.

There are also no particular limitations on the warming conditions, and various conditions such as warming temperature, warming time, and warming apparatus may be appropriately selected according to the intended purpose. Examples of warming apparatuses include warming roll machines commonly used for warming rubber compositions.

There are also no particular limitations on the extrusion conditions, and various conditions such as extrusion time, extrusion speed, extrusion apparatus, and extrusion temperature may be appropriately selected according to the intended purpose. Examples of extrusion apparatuses include extruders commonly used for extruding rubber compositions. The extrusion temperature may be appropriately determined.

There are also no particular limitations on the apparatus, method, or conditions for vulcanization, and these may be appropriately selected according to the intended purpose. Examples of apparatuses for vulcanization include molding vulcanizers using molds, which are commonly used for vulcanizing rubber compositions. As for the vulcanization conditions, the temperature is, for example, about 100 to 190°C.

### (Tire)

The tire of the present disclosure is characterized by including the above-described rubber composition for tread of the present disclosure. By including the rubber composition for tread of the present disclosure as a tire material, excellent wear resistance can be achieved without deteriorating other physical properties.

Here, the tire of the present disclosure can be used, for example, as a heavy-duty tire, a tire for trucks and buses, a tire for aircraft, or a tire for passenger vehicles, but among these, it is preferable to use it as a heavy-duty tire. This is because the rubber composition for tread used as the material for the tread portion has excellent wear resistance, and thus provides significant advantages when used as a heavy-duty tire.

When using the above-described rubber composition for tread of the present disclosure, for example, a vulcanized rubber may be obtained by molding an unvulcanized rubber composition and then vulcanizing it, or by molding a semi-vulcanized rubber that has undergone a preliminary vulcanization step and then further subjecting it to main vulcanization. The tire of the present embodiment is preferably a pneumatic tire, and as the gas to be filled in the pneumatic tire, in addition to ordinary air or air with adjusted oxygen partial pressure, inert gases such as nitrogen, argon, or helium may be used.

In the tire of the present disclosure, it is required to apply the above-described rubber composition for tread of the present disclosure to the tread (base tread, cap tread, under tread), but it may also be applied to various other structural members. For example, it may be used for cushion rubber, shoulder, sidewall, clinch, bead filler, coating rubber for carcass, insulation, chafer, inner liner, and the like, and may also be used for the side reinforcing layer of a run flat tire. Furthermore, the rubber composition for tread of the present disclosure can also be applied to rubber crawlers, seismic isolation rubber, and the like, in addition to tires.

### EXAMPLES

The present disclosure will be described in further detail below with reference to examples, but the present disclosure is not limited in any way to the following examples.

### [Examples 1-7, Comparative Examples 1-3]

Samples of the rubber composition for tread are assumed to be prepared by blending each component according to the formulations shown in Table 1 and kneading them using a Banbury mixer. Although not indicated in Table 1, various processing aids, additives, vulcanization agents, and vulcanization accelerators are appropriately added within a range that does not affect the effects of the present disclosure during sample preparation.

### (Evaluation)

For each sample of the rubber composition for tread, it is assumed that after extrusion into a sheet, vulcanization is performed at 145°C for 90 minutes to prepare a vulcanized rubber sample. Then, the following evaluations are assumed to be performed on the obtained vulcanized rubber samples.

### (1) Evaluation of Low Heat Generating Property

For each vulcanized rubber sample, it is assumed that the loss tangent (tanδ) is measured under the conditions of a temperature of 23°C, initial load of 1600 mN, dynamic strain of 1%, and frequency of 52 Hz using a spectrometer (manufactured by Ueshima Seisakusho Co., Ltd.).

Using measurement results of formulations not indicated in the table, performance impact simulations due to formulation changes were conducted, and the loss tangent (tanδ) of the formulations listed in the table was predicted. For evaluation, the reciprocal of the measured value of tanδ was taken, and the index was indicated with the reciprocal value of tanδ of the sample of Comparative Example 1 set to 100. The larger the index value, the better the low heat generating property. The evaluation results are presented in Table 1. If the index value is 90 or more, there is no impact on tire performance.

### (2) Evaluation of Wear Resistance

For each vulcanized rubber sample, it is assumed that the wear rate is measured by rolling it at a constant speed over an abrasive wheel.

Using measurement results of formulations not indicated in the table, performance impact simulations due to formulation changes were conducted, and the wear rate of the formulations listed in the table was predicted. For evaluation, the reciprocal of the wear rate was calculated, and the index was indicated with the reciprocal of the wear rate of the vulcanized rubber made from the rubber composition of Comparative Example 1 set to 100. The larger the index value, the slower the wear rate and the better the wear resistance. The evaluation results are presented in Table 1.

### (3) Rupture Resistance

For each vulcanized rubber sample, it is assumed that the rupture strength after thermal aging at 100°C for 24 hours is measured.

Using measurement results of formulations not indicated in the table, performance impact simulations due to formulation changes were conducted, and the rupture resistance of the formulations listed in the table was predicted. For evaluation, the index value was indicated with the measurement result of Comparative Example 1 set to 100, and the larger the index value, the better the rupture resistance.

**[Table 1]**

| | Example 1 | Example 2 | Example 3 | Example 4 | Example 5 | Example 6 | Example 7 | Comparative Example 1 | Comparative Example 2 | Comparative Example 3 |
|---|---|---|---|---|---|---|---|---|---|---|
| General-purpose NR *1 | - | - | - | - | - | - | - | 100 | 100 | - |
| High-purity NR *2 | 100 | 100 | 100 | 100 | 100 | 100 | 100 | - | - | 100 |
| CB1 *3 | - | - | - | - | - | - | - | 45 | - | 45 |
| CB2 *4 | 50 | 50 | 55 | 50 | 40 | 40 | 45 | - | 45 | - |
| Silica *6 | 10 | 10 | 10 | 10 | 10 | 20 | 20 | 20 | 20 | 20 |
| Antioxidant *5 | 1 | 3 | 1.5 | 1.5 | 1.5 | 1.5 | 2 | 1 | 2 | 2 |
| Total of CB + Silica | 60 | 60 | 65 | 60 | 50 | 60 | 65 | 65 | 65 | 65 |
| Heat buildup property | 111 | 106 | 100 | 110 | 136 | 119 | 94 | 100 | 96 | 104 |
| Wear resistance evaluation | 119 | 100 | 116 | 113 | 108 | 117 | 108 | 100 | 103 | 81 |
| Rupture resistance | 104 | 96 | 96 | 102 | 108 | 102 | 105 | 100 | 95 | 98 |

| | | | | | | | | | | |
|---|---|---|---|---|---|---|---|---|---|---|
| *1 TSR20 *2 High-purity natural rubber with a nitrogen content of 0.18 mass% obtained by centrifugal separation *3 Carbon black with N₂SA: 126 m²/g, DBP oil absorption: 92 ml/100 g *4 Carbon black with N₂SA: 145 m²/g, DBP oil absorption: 99 ml/100 g *5 N-(1,3-dimethylbutyl)-N'-phenyl-p-phenylenediamine, "Nocrac 6C" manufactured by Ouchi Shinko Chemical Industrial Co., Ltd. *6 "Nipsil KQ" manufactured by Tosoh Silica Corporation | | | | | | | | | | |

From Table 1, it can be understood that each sample of a rubber composition for tread corresponding to the examples demonstrates well-balanced and excellent results in terms of low heat generating property, wear resistance, and rupture resistance. On the other hand, it can be understood that each sample of a rubber composition for tread corresponding to the comparative examples is inferior to the examples in at least one evaluation item.

### INDUSTRIAL APPLICABILITY

According to the present disclosure, it is possible to provide a rubber composition for tread having excellent wear resistance without deteriorating other physical properties.

Furthermore, according to the present disclosure, it is possible to provide a tire having excellent wear resistance without deteriorating other physical properties.

## Claims

1. A rubber composition for tread comprising a rubber component, silica, carbon black, and an antioxidant, wherein
the rubber component includes high-purity natural rubber having a nitrogen content of 0.3 mass% or less,
total content of the silica and the carbon black is 50 parts by mass or more per 100 parts by mass of the rubber component,
the carbon black has a nitrogen adsorption specific surface area (N₂SA) of 135 m²/g or more, and
content of the antioxidant is 0.4 parts by mass or more per 100 parts by mass of the rubber component.

2. The rubber composition for tread according to claim 1, wherein the high-purity natural rubber is obtained by removing protein from natural rubber latex by a centrifugal separation process.

3. The rubber composition for tread according to claim 1 or 2, wherein the content of the antioxidant is not less than 0.7 parts by mass and less than 3 parts by mass per 100 parts by mass of the rubber component.

4. The rubber composition for tread according to claim 1 or 2, wherein content of the carbon black is 40 parts by mass or more per 100 parts by mass of the rubber component.

5. The rubber composition for tread according to claim 1 or 2, wherein content of the silica is not less than 5 parts by mass and not more than 25 parts by mass per 100 parts by mass of the rubber component.

6. The rubber composition for tread according to claim 1 or 2, wherein the silica has a CTAB specific surface area of 200 ml/100 g to 240 ml/100 g.

7. A tire comprising the rubber composition for tread according to claim 1 or 2.
